**Europäisches Patentamt**

**European Patent Office**

**Office européen des brevets**

(11) Veröffentlichungsnummer : **0 359 066 B1**

(12)

# EUROPÄISCHE PATENTSCHRIFT

(45) Veröffentlichungstag der Patentschrift :
**29.04.92 Patentblatt 92/18**

(51) Int. Cl.$^5$ : **B61D 19/02,** E05D 15/10,
B60J 5/06

(21) Anmeldenummer : **89116192.9**

(22) Anmeldetag : **01.09.89**

(54) Schiebetür für Fahrzeuge.

(30) Priorität : **14.09.88 CH 3431/88**

(43) Veröffentlichungstag der Anmeldung :
**21.03.90 Patentblatt 90/12**

(45) Bekanntmachung des Hinweises auf die
Patenterteilung :
**29.04.92 Patentblatt 92/18**

(84) Benannte Vertragsstaaten :
**AT BE CH DE ES FR IT LI**

(56) Entgegenhaltungen :
**FR-A- 2 133 309**
**FR-A- 2 294 871**

(73) Patentinhaber : **INVENTIO AG**
**Seestrasse 55**
**CH-6052 Hergiswil NW (CH)**

(72) Erfinder : **Blondé, Jean-Marc**
**6 Rue des Landes**
**F-68300 Rosenau (FR)**

## Beschreibung

Die Erfindung betrifft eine Schiebetür für Fahrzeuge, insbesondere für Schienenfahrzeuge, bestehend aus einem Türrahmen, einem Türflügel und einem Antrieb für die Schiebebewegung des Türflügels.

Aus der Patentschrift AT 366 633 ist eine Schiebetür bekannt, bei der der Türflügel entlang von innenliegenden Führungsschienen bewegt wird. Die oben und unten angeordneten, endseitig abgekrümmten Führungsschienen sind dergestalt, dass beim Oeffnungsvorgang der Türflügel anfänglich aus dem Türrahmen und anschliessend in einem bestimmten Abstand parallel zur Karosseriewand bis zur Oeffnungslage geschoben wird. Beim Schliessvorgang wird der Türflügel anfänglich parallel zur Karosseriewand bewegt und anschliessend soweit in den Türrahmen hinein geführt, bis der Türflügel bündig mit dem Türrahmen liegt. Die Schiebebewegung des Türflügels wird von einem ersten Antrieb bewirkt, wobei beim Schliessvorgang kurz vor Ende der Schiebebewegung der erste Antrieb von einem zweiten Antrieb unterstützt wird.

Die Nachteile dieser bekannten Einrichtung liegen in der witterungsbedingten Störanfälligkeit der Führungsschienen und Antriebe und in der dementsprechend verminderten Betriebssicherheit. Grosser mechanischer Aufwand und die damit verbundenen grossen Herstellungskosten sowie grosse Einstell- und Unterhaltsarbeiten sind weitere Nachteile der bekannten Einrichtung.

Hier will die Erfindung Abhilfe schaffen. Die Erfindung, wie sie in den Ansprüchen gekennzeichnet ist, löst die Aufgabe, eine Schiebetür zu schaffen, bei der der in der Schliesslage bündig mit dem Türrahmen liegende Türflügel von der Schliesslage mit einer nur eine Verschieberichtung aufweisende Schiebebewegung in die Oeffnungslage gebracht wird.

Die durch die Erfindung erreichten Vorteile sind im wesentlichen darin zu sehen, dass mit der erfindungsgemässen Schiebetür die Türöffnungszeiten und die Türschliessungszeiten wesentlich verkürzt werden und dass sich die Schiebetür insbesondere in der Schliesslage des Türflügels durch eine robuste Türflügelfixierung auszeichnet.

Im folgenden wird die Erfindung anhand von lediglich einen Ausführungsweg darstellenden Zeichnungen näher erläutert. Es zeigen:

Fig. 1 eine Aussenansicht einer erfindungsgemässen Schiebetür in der Schliesslage,

Fig. 2 einen Schnitt entlang der Linie A-A in Fig. 3 und 4 durch die Schiebetür gemäss Fig. 1,

Fig. 3 einen Schnitt entlang der Linie C-C in der Fig. 2 durch einen oberen Antrieb der Schiebetür in der Schliesslage und in der Oeffnungslage,

Fig. 4 einen Schnitt entlang der Linie B-B in der Fig. 2 durch einen unteren Antrieb der Schiebetür in der Schliesslage,

Fig. 5 Einzelheiten des oberen Antriebes gemäss Fig. 3,

Fig. 6 den oberen Antrieb gemäss Fig. 5 im Aufriss,

Fig. 7 einen Schnitt entlang der Linie D-D in der Fig. 5 durch den oberen Antrieb der Schiebetür gemäss Fig. 1 und

Fig. 8 einen Seitenriss des oberen Antriebs gemäss Fig. 7.

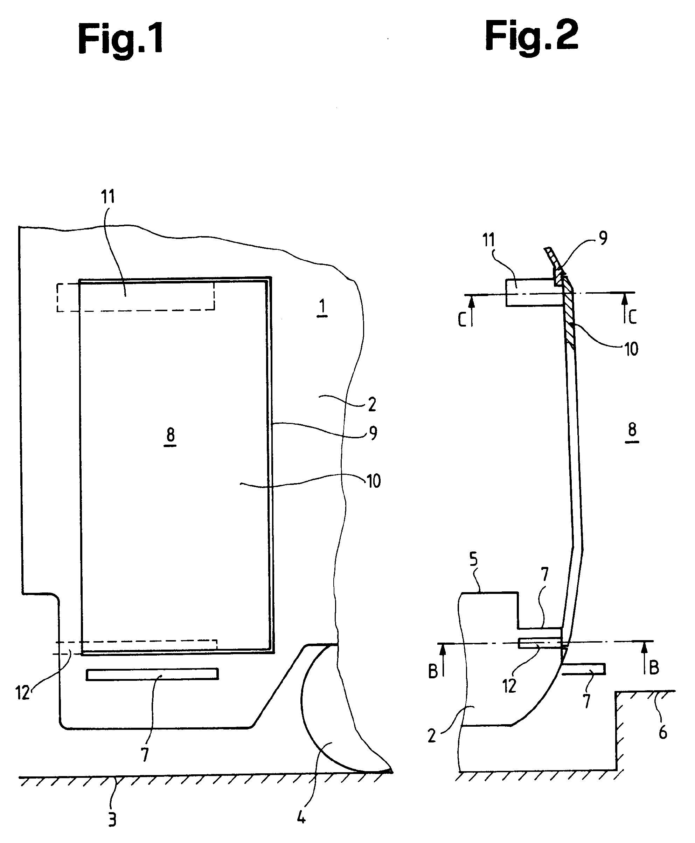

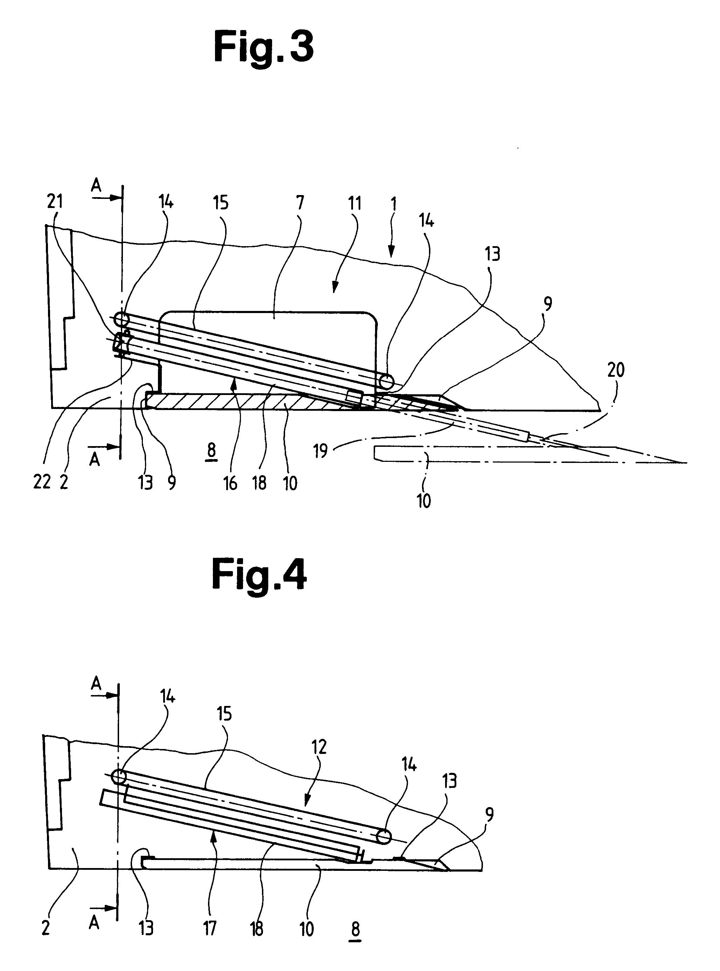

In den Fig. 1 bis 8 ist mit 1 ein aus einer Karosserie 2 und aus auf Schienen 3 fahrenden Rädern 4 bestehender Eisenbahnwagen bezeichnet. Ein Passagierdeck 5 des Eisenbahnwagens 1 ist von einem Bahnsteig 6 über Stufen 7 und durch eine Schiebetür 8 erreichbar. Diese besteht aus einem Türrahmen 9, einem Türflügel 10, einem oberen Antrieb 11 und aus einem unteren Antrieb 12. Beide Antriebe 11;12 sind innerhalb der Karosserie 2 angeordnet. Die Schliesslage des Türflügels 10 wird von Sicherheitsschaltern 13 überwacht. Die Antriebe 11;12 bestehen aus einem von zwei Laufrädern 14 geführten Zahnriemen 15, der ineinander geschobene Rohre eines dreiteiligen Teleskoparmes 16;17 bewegt. Ein erstes Rohr 18 ist fest mit der Karosserie 2 verbunden, ein zweites Rohr 19 ist gegenüber dem ersten Rohr 18 in der Längsrichtung nach rechts verschiebbar und ein drittes Rohr 20 ist gegenüber dem zweiten Rohr 19 in der Längsrichtung nach rechts verschiebbar, so dass durch eine Schiebebewegung das zweite Rohr 19 aus dem ersten Rohr 18 und das dritte Rohr 20 aus dem zweiten Rohr 19 austritt. Eines der beiden Laufräder 14 wird über eine nicht dargestellte Drehwelle elektromotorisch vorwärts und rückwärts angetrieben. Der Türflügel 10 ist am oberen Teleskoparm 16 und an einem mit einer Rolle 21 in Verbindung stehenden Hebel 22 aufgehängt. Die Rolle 21 läuft auf dem oberen Teleskoparm 16 und wird vom Zahnriemen 15 angetrieben. Die Unterkante des Türflügels 10 wird vom unteren Teleskoparm 17 geführt.

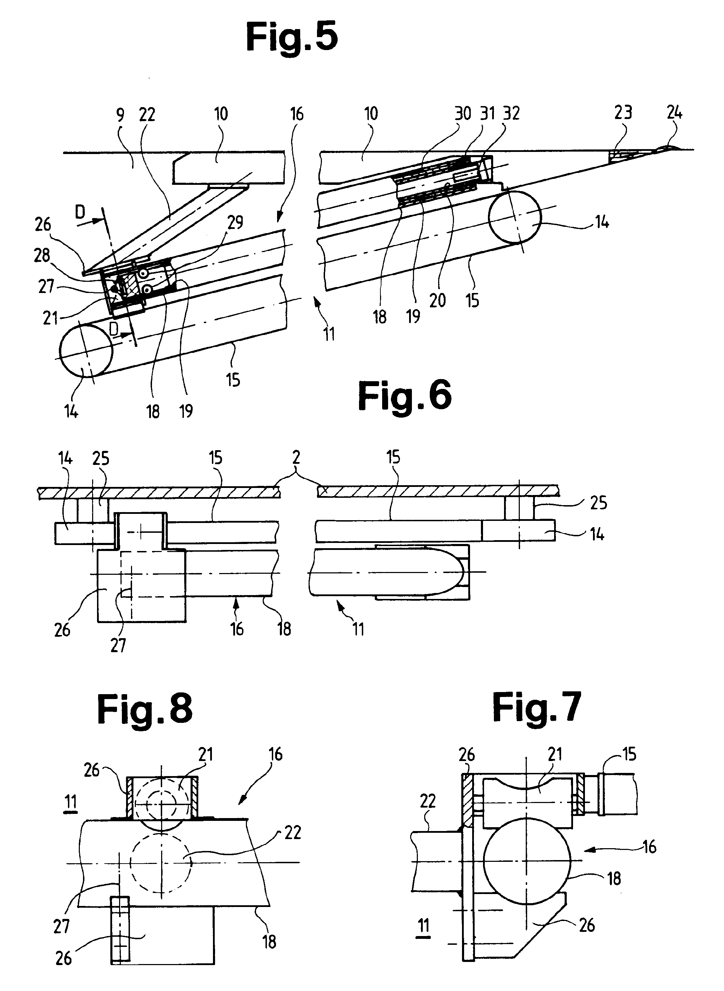

In der Fig. 5 bis 8 ist mit 23 eine Kante des Türflügels 10 bezeichnet, die eine den Innenraum des Eisenbahnwagens 1 gegen die Unbill des Wetters schützende Dichtleiste 24 trägt. Die dem dargestellten oberen Antrieb 11 zugehörigen Laufräder 14 sind mittels Laufradachsen 25 mit der Karosserie 2 verbunden. Eine von der Rolle 21 getragene, U-förmige Konsole 26 steht mit dem Zahnriemen 15 in Verbindung. Auf der Unterseite der Konsole 26 ist ein Bolzen 27 angeordnet, der die vom Zahnriemen 15 bewirkte Kraft durch einen nicht dargestellten Langschlitz im ersten Rohr 18 des Teleskoparmes 16 auf ein am linken Ende des zweiten Rohres 19 sitzendes Abschlussteil 28 überträgt. Am Abschlussteil 28 angeordnete Führungsrollen 29 und ein am rechten Ende angeordnetes erstes Gleitlager 30 stützen das zweite Rohr 19 auf dem ersten Rohr ab. Das dritte Rohr 20 wird mittels einem zweiten Gleitlager 31 auf dem zweiten Rohr 19 abgestützt. Ein in das rechte Ende des dritten Rohres 20 eingelassener Zapfen 32 überträgt die Verschiebekraft auf den Türflügel 10.

In einer weiteren Ausführungsvariante kann ein Türflügelantrieb eingesetzt werden, der anstelle des Zahnriemens und Teleskoparmes einen pneumatisch oder hydraulisch bewegten Teleskopzylinder aufweist.

**Patentansprüche**

1. Schiebetür für Fahrzeuge, insbesondere für Schienenfahrzeuge, bestehend aus einem Türrahmen (9), einem Türflügel (10) und einem Antrieb für die Schiebebewegung des Türflügels (10), **dadurch gekennzeichnet**, dass der Antrieb einen oberen Teleskoparm (16) und einen unteren Teleskoparm (17) aufweist, die den in der Schliesslage bündig mit dem Türrahmen (9) liegenden Türflügel (10) mit einer geradlinigen Schiebebewegung in die Oeffnungslage bringen.

2. Schiebetür nach Anspruch 1, **dadurch gekennzeichnet**, dass der Antrieb einen parallel zum Teleskoparm (16;17) liegenden Zahnriemen (15) aufweist, der einen für die Schiebebewegung des Türflügels (10) nötige Verschiebekraft auf den Teleskoparm (16;17) überträgt.

3. Schiebetür nach Anspruch 1, **dadurch gekennzeichnet**, dass der Antrieb einen oberen Teleskopzylinder und einen unteren Teleskopzylinder aufweist, in denen die für die Schiebebewegung des Türflügels (10) nötige Verschiebekraft pneumatisch erzeugt wird.

4. Schiebetür nach Anspruch 1, **dadurch gekennzeichnet**, dass der Antrieb einen oberen Teleskopzylinder und einen unteren Teleskopzylinder aufweist, in denen die für die Schiebebewegung des Türflügels (10) nötige Verschiebekraft hydraulisch erzeugt wird.

5. Schiebetür nach Anspruch 1, **dadurch gekennzeichnet**,
– dass der Türflügel (10) am oberen Teleskoparm (16) und an einem parallel zum oberen Teleskoparm (16) laufenden Hebel (22) aufgehängt ist und
– dass der Türflügel (10) an der mit dem unteren Teleskoparm (17) in Verbindung stehenden Unterkante geführt ist.

6. Schiebetür nach Anspruch 1, **dadurch gekennzeichnet**, dass der Teleskoparm (16;17) ineinander geschobene Rohre (18;19;20) aufweist.

7. Schiebetür nach Anspruch 1, **dadurch gekennzeichnet**, dass zur Ueberwachung der Schliesslage des Türflügels (10) am Türrahmen (9) Sicherheitsschalter (13) angeordnet sind.

8. Schiebetür nach Anspruch 2, **dadurch gekennzeichnet**, dass der Antrieb zwei den Zahnriemen (15) führende, an einer Karosserie (2) angeordnete Laufräder (14) aufweist, wovon eines über eine Drehwelle angetrieben ist und den Zahnriemen (15) in einen Vorwärts- und Rückwärtslauf versetzt.

9. Schiebetür nach Anspruch 5, **dadurch gekennzeichnet**, dass der Hebel (22) mit einer vom Zahnriemen (15) bewegten Konsole (26) in Verbindung steht, die von einer auf dem oberen Teleskoparm (16) laufenden Rolle (21) getragen wird.

10. Schiebetür nach Anspruch 6, **dadurch gekennzeichnet**,
– dass ein erstes Rohr (18) an der Karosserie (2) angeordnet ist,
– dass ein zweites Rohr (19) gegenüber dem ersten Rohr (18) in der Längsrichtung verschiebbar ist und
– dass ein drittes Rohr (20) gegenüber dem zweiten Rohr (19) in der Längsrichtung verschiebbar ist.

11. Schiebetür nach Anspruch 9, **dadurch gekennzeichnet**, dass die Konsole (26) einen Bolzen (27) aufweist, der durch einen Langschlitz im ersten Rohr (18) auf einen am linken Ende des zweiten Rohres (19) angeordneten Abschlussteil (28) einwirkt.

12. Schiebetür nach Anspruch 10, **dadurch gekennzeichnet**, dass der Abschlussteil (28) Führungsrollen (29) aufweist, die zusammen mit einem am rechten Ende des ersten Rohres (19) angeordneten ersten Gleitlager (30) das zweite Rohr (19) führen.

13. Schiebetür nach Anspruch 10, **dadurch gekennzeichnet**, dass das zweite Rohr (19) ein zur Führung des dritten Rohres (20) vorgesehenes zweites Gleitlager (31) aufweist.

14. Schiebetür nach Anspruch 10, **dadurch gekennzeichnet**, dass das dritte Rohr (20) am rechten Ende einen zur Uebertragung der Verschiebekraft auf den Türflügel (10) vorgesehenen Zapfen (32) aufweist.

15. Schiebetür nach Anspruch 1, **dadurch gekennzeichnet**, dass der Türflügel (10) eine eine Dichtleiste (24) tragende Kante (23) aufweist.

## Claims

1. Sliding door for vehicles, in particluar for rail vehicles, consisting of a door frame (9), a door panel (10) and a drive for the sliding movement of the door panel (10), characterised thereby that the drive has an upper telescopic arm (16) and a lower telescopic arm (17), which bring the door panel (10), which in the closed position lies flush with the door frame (9), into the opening position by a rectilinear sliding movement.

2. Sliding door according to claim 1, characterised tehreby that the drive has a toothed belt (15) which lies parallel to the telescopic arms (16; 17) and which transfers to the telescopic arms (16; 17) a displacement force required for the sliding movement of the door panel (10).

3. Sliding door according to claim 1, characterised thereby, that the drive has an upper telescopic cylinder and a lower telescopic cylinder, in which the displacement force required for the sliding moment of the door panel (10) is generated pneumatically.

4. Sliding door according to claim 1, characterised thereby that the drive has an upper telescopic cylinder and a lower telescopic cylinder, in which the displacement force required for the sliding movement of the door panel (10) is generated hydraulically.

5. Sliding door according to claim 1, characterised thereby
– that the door panel (10) is suspended at the upper telescopic arm (16) and at a lever (22) extending parallel to the upper telescopic arm (16) and
– that the door panel (10) is guided at the lower edge standing in connection with the lower telescopic arm 917).

6. Sliding door according to claim 1, characterised thereby that the telescopic arms (16; 17) have tubes (18; 19; 20) pushed into one another.

7. Sliding door according to claim 1, characterised thereby that safety switches (13) are arranged at the door frame (9) for monitoring the closing position of the door panel (10).

8. Sliding door according to claim 2, characterised thereby that the drive has two track wheels (14) arranged at a bodywork (2) and guiding the toothed belt (15), of which one is driven by a rotary shaft and displaces the toothed belt (15) in a forward and rearward travel.

9. Sliding door according to claim 5, characterised thereby that the lever (22) stands in connection with a bracket (26) which is moved by the toothed belt (15) and which is carried by a roller (21) running on the upper telescopic arm (16).

10. Sliding door according to claim 6, characterised thereby
– that a first tube (18) is arranged at the bodywork (2),
– that a second tube (19) is displaceable in the longitudinal direction relative to the first tube (18) and
– that a third tube (20) is displaceable in the longitudinal direction relative to the second tube (19).

11. Sliding door according to claim 9, characterised thereby that the bracket (26) has a bolt (27) which acts by way of an elongate slot in the first tube (18) on a closing-off part (28) arranged at the left end of the second tube (19).

12. Sliding door according to claim 10, characterised thereby that the closing-off part (28) has guide rollers (29) which, together with a first slide bearing (30) arranged at the right end of the first tube (19), guide the second tube (19).

13. Sliding door according to claim 10, characterised thereby that the second tube (19) has a second slide bearing (31) for the guidance of the third tube (20).

14. Sliding door according to claim 10, characterised thereby that the third tube (20) has a pin (32) provided at the right end for the transfer of the displacing force to the door panel (10).

15. Sliding door according to claim 1, characterised thereby, that the door panel (10) has an edge (23) carrying a sealing strip (24).

## Revendications

1. Porte coulissante pour véhicules, notamment pour véhicules sur rails, feormée d'un cadre de porte (9), d'un battant (10) et d'un mécanisme d'entraînement pour le mouvement coulissant du battant (10), caractérisée en ce que le mécanisme d'entraînement possède un bras télescopique supérieur (16) et un bras télescopique inférieur (17) amenant le battant (10), qui forme, en position fermée, une surface plane avec le cadre de porte (9), en position ouverte grâce à un mouvement coulissant en ligne droite.

2. Porte coulissante selon la revendication 1, caractérisée en ce que le mécanisme d'entraînement possède une courroie dentée (15), située parallèlement au bras télescopique (16 ; 17), qui transmet audit bras télescepique (16 ; 17) une force de coulissement nécessaire au mouvement coulissant du battant (10).

3. Perte coulissante selon la revendication 1, caractérisée en ce que le mécanisme d'entraînement possède un vérin télescopique supérieur et un vérin télescopique inférieur dans lesquels est produite de façon pneumatique la force de coulissement nécessaire au mouvement coulissant du battant (10).

4. Perte coulissante selon la revendication 1, caractérisée en ce que le mécanisme d'entrainement possède un vérin télescopique supérieur et un vérin télescopique inférieur dans lesquels est produite de façon hydraulique la force de coulissant nécessaire au mouvement coulissant du battant (10).

5. Porte coulissante selon la revendication 1, caractérisée

– en ce que le battant (10) est accroché au bras télescopique supérieur (16) et à un levier (22) s'étendant parallèlement à celui-ci, et

– en ce que le battant (10) est guidé au niveau du bord inférieur relié au bras télescopique inférieur (17).

6. Porte coulissante selon la revendication 1, caractérisée en ce que le bras télescopique (16 ; 17) possède des tubes introduits les uns dans les autres (18 ; 19 ; 20).

7. Porte coulissante selon la revendication 1, caractérisée en ce qu'il est prévu, peur surveiller la position fermée du battant (10), des commutateurs de sécurité (13) disposés au niveau du cadre de porte (9).

8. Perte coulissante selon la revendication 2, caractérisée en ce que le mécanisme d'entraînement possède deux galets de roulement (14) disposés au niveau d'une carrosserie (2) et guidant la courroie dentée (15), dont l'un est entraîné par l'intermédiaire d'un arbre de rotation et déplace la courroie dentée (15) vers l'avant et l'arrière.

9. Perte coulissante selon la revendication 5, caractérisée en ce que le levier (22) est relié à une console (26) qui est déplacée par la courroie dentée (15) et qui est portée par un galet (21) roulant sur le bras télescopique supérieur (16).

10. Perte coulissante selon la revendication 6, caractérisée

– en ce qu'un premier tube (18) est disposé au niveau de la carrosserie (2),

– en ce qu'un second tube (19) est apte à coulisser dans le sens longitudinal par rapport au premier tube (18), et

– en ce qu'un troisième tube (20) est apte à coulisser dans le sens longitudinal par rapport au second tube (19).

11. Porte coulissante selon la revendication 9, caractérisée en ce que la console (26) possède une cheville (27) qui agit, à travers une fente oblongue ménagée dans le premier tube (18), sur un élément de fermeture (28) disposé au niveau de l'extrémité gauche du second tube (19).

12. Porte coulissante selon la revendication 10, caractérisée en ce que l'élément de fermeture (28) possède des galets de guidage (29) qui, avec le premier palier à glissement (30) disposé au niveau de l'extrémité droite du premier tube (19), guident celui-ci.

13. Porte coulissante selon la revendication 10, caractérisée en ce que le second tube (19) possède un second palier à glissement (31) prévu pour guider le troisième tube (20).

14. Porte coulissante selon la revendication 10, caractérisée en ce que le troisième tube (20) possède, au niveau de son extrémité droite, un tourillon (32) prévu peur transmettre la force de coulissant au battant (10).

15. Perte coulissante selon la revendication 1, caractérisée en ce que le battant (10) possède un bord (23) portant une bande d'étanchéité (24).

# Fig.1

# Fig.2

# Fig.3

# Fig.4

EP 0 359 066 B1

# Fig.5

# Fig.6

# Fig.8

# Fig.7

8